# EUROPEAN PATENT APPLICATION

(11) **EP 4 287 352 A1**
(43) Date of publication of application: **06.12.2023**
(21) Application number: 22745699.3
(22) Date of filing: 20.01.2022
(51) Int. Cl.: H01M 10/48, H01M 50/213, H01M 50/284, H01M 50/298, H01M 50/574

(54) **POWER SOURCE DEVICE AND METHOD FOR MANUFACTURING SAME**

(30) Priority: 29.01.2021 JP 2021013123
(71) Applicant: Panasonic Energy Co., Ltd., Osaka 570-8511 (JP)
(72) Inventor: KAWAI, Naoki, Kadoma-shi, Osaka 571-0057 (JP); YAMASHITA, Takahiro, Kadoma-shi, Osaka 571-0057 (JP)
(74) Representative: Novagraaf International SA
(86) International application number: PCT/JP2022/001893
(87) International publication number: WO 2022/163478

(57) **Abstract**

Erroneous fuse-blowout during assembling is avoided, thereby improving workability. A power supply device (100) includes a battery unit (2) and a circuit unit (3) electrically connected to the battery unit (2) for controlling charging and discharging. The battery unit (2) includes a series connection including secondary battery cells (1) connected at least in series to one another, a battery-side ground (21G) on a low-voltage side of the series connection, and a battery-side output (21H) on a high-voltage side of the series connection. The circuit unit (3) includes an overvoltage-detecting fuse configured to detect an overvoltage and to blow upon detecting the overvoltage. The method includes: connecting a battery-side intermediate terminal (21) disposed in the battery unit (2) to a circuit-side intermediate terminal (41) disposed in the circuit unit (3) while a detachable lead member (50) is detached, the battery-side intermediate terminal (21) being electrically connected to an intermediate potential of a part of the plurality of the secondary battery cells (1) connected in series to one another; and connecting the overvoltage-detecting fuse to the battery-side output (21H) by fixing the lead member (50) to the circuit unit (3).

## Description

### TECHNICAL FIELD

The present invention relates to a power supply device and a method of manufacturing the device.

### BACKGROUND ART

A power supply device that includes a lot of secondary battery cells connected in series and parallel to one another is used as a backup power supply for a server or as a power supply device in applications to stationary batteries for home appliances, business facilities, and plants. The applications further include power sources for driving vehicles such as a hybrid vehicle, an electric vehicle, an electric cart, and an electric scooter, and also include electric power sources for driving a power-assisted bicycle and an electric power tool. Such a power supply device is provided with a lot of secondary battery cells connected in series, thereby being intended to supply a higher power output.

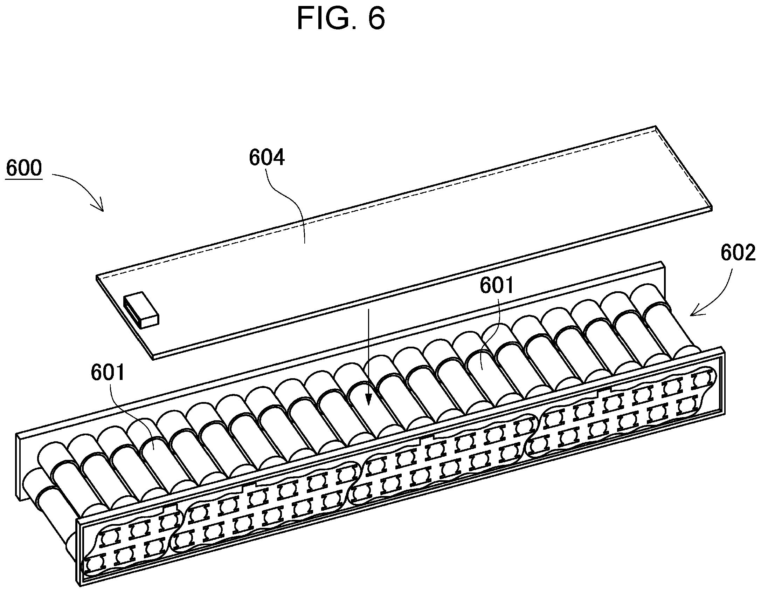

For example, power supply device 600 illustrated in the exploded perspective view of FIG. 6 includes battery unit 602 that holds a plurality of secondary battery cells 601, and circuit board 604 on which overvoltage-detecting fuses and a control circuit for controlling charging and discharging of secondary battery cells 601 are mounted.

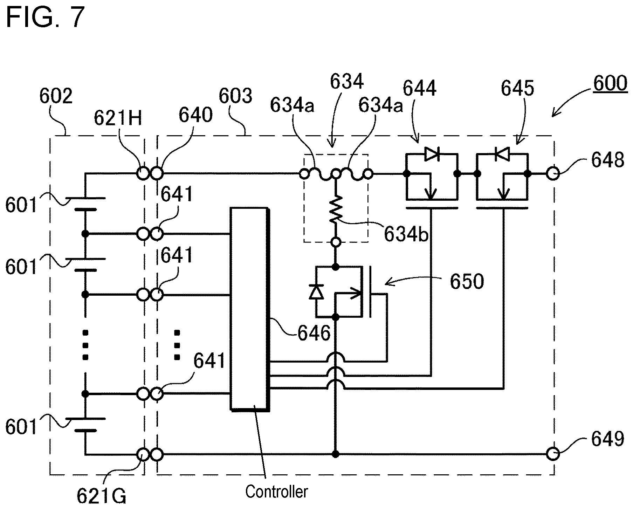

The power supply device includes overvoltage-detecting fuses configured to blow upon detecting an overvoltage in order to protect the secondary battery cells from the overvoltage. A circuit diagram of the power supply device including such overvoltage-detecting fuses is shown in FIG. 7. As shown in the figure, in power supply device 600, battery unit 602 is connected to circuit unit 603. Battery unit 602 includes a lot of secondary battery cells 601 connected in series to one another, battery-side ground terminal 621G, and battery-side total-positive terminal 621H. On the other hand, circuit unit 603 includes connection terminals 641 for connection to battery unit 602, external terminals 648 and 649, and conductive paths that connect between connection terminals 641 and external terminal 648 and between connection terminals 641 and external terminal 649. In addition, circuit unit 603 includes fuse module 634, charging switching-element 644, and discharging switching-element 645 in a conductive path on the positive-electrode side that connects between connection terminal 640 and external terminal 648. Fuse module 634 includes a combination of two thermal fuses 634a and 634a connected in series to each other at a connection point and heating resistor 634b with one end thereof connected to the connection point. The other end of heating resistor 634b is connected via resistance-heating switching element 650 to a conductive path on the ground side that connects between connection terminals 641 and external terminal 649. The other end of heating resistor 634b is not necessarily connected to the ground side but may be connected to an intermediate potential of secondary battery cells 601 depending on the circuit configuration. The resistance-heating switching element may appropriately adopt various switching elements, such as a MOSFET.

In circuit unit 603, connection terminals 641 are connected to controller 646, thereby allowing controller 646 to monitor the voltages of secondary battery cells 601. Controller 646 is also connected to the gate of resistance-heating switching element 650. When determining that the voltage of secondary battery cell 601 is in an abnormal state such as an overvoltage, the controller turns on resistance-heating switching element 650 to cause heating resistor 634b to heat, thereby blowing thermal fuses 634a.

In assembling such a power supply device, from the viewpoint of workability, random connection has been demanded which allows an unspecified order of connections between the power supply device and the series-connection parts of a cell block. Unfortunately, in connecting the circuit board having the overvoltage-detecting fuses to the series-connection parts in which a lot of secondary battery cells are connected in series, it has posed a problem as follows: When the random connection is carried out for the board including a circuit section that contains the overvoltage-detecting fuses capable of turning into a blown path, the overvoltage-detecting fuses are sometimes erroneously caused to blow due to, such as, the instantaneously detecting operation carried out by an overvoltage protection IC during the random connection. As illustrated in FIG. 6, in particular, in the case where the circuit unit is connected while being placed on the battery unit, it has been so difficult to control which one of the multiple terminals becomes in contact first that the overvoltage-detecting fuses possibly and erroneously blow during the assembling depending on how the connection is carried out. For this reason, random connection has not been possible, in which case each of the series-connection parts must be connected to the circuit board in ascending order of voltage, starting by connecting between the circuit-side ground and the battery-side ground. This requires a specified order of connections, resulting in decreased workability and longer working time.

### Citation List

### Patent Literature

PTL 1: Japanese Patent Laid-Open Publication No. 2014-102968

### SUMMARY

### Technical Problem

An object of the present invention is to provide a power supply device that avoids an erroneous blowout of a fuse during assembling the device and improves workability in the assembling, and a method of manufacturing the power supply device.

### Solution to Problem and Effect of Invention

To achieve the above object, a method of manufacturing a power supply device according to a first aspect of the present invention that includes a battery unit and a circuit unit electrically connected to the battery unit and configured to control charging and discharging of the battery unit. The battery unit includes a series connection including secondary battery cells connected at least in series to one another, a battery-side ground on a low-voltage side of the series connection, and a battery-side output on a high-voltage side of the series connection. The circuit unit includes an overvoltage-detecting fuse configured to detect an overvoltage and to blow upon detecting the overvoltage. In the method, one or more battery-side intermediate terminals disposed in the battery unit are connected to respective one or more circuit-side intermediate terminals disposed in the circuit unit while a detachable lead member configured to connect the overvoltage-detecting fuse to the battery-side output is detached. The one or more battery-side intermediate terminals are electrically connected to intermediate potentials of at least a part of the secondary battery cells connected in series to one another. The overvoltage-detecting fuse is connected to the battery-side output by fixing the lead member to the circuit unit. In this configuration, the detachment of the detachable lead member during assembling the power supply device allows the overvoltage-detecting fuse of the circuit unit to be electrically separated, thereby avoiding a possible situation where the overvoltage-detecting fuse erroneously blows in connecting the battery-side intermediate terminals of the battery unit to the circuit-side intermediate terminals of the circuit unit. Further, the detachment enables random connection between the battery-side intermediate terminals and the circuit-side intermediate terminals, which resultantly enhancing workability of connecting between the circuit unit and the battery unit, leading to an increase of manufacturing efficiency.

In a method of manufacturing a power supply device according to a second aspect of the present invention is, in the method described above, the circuit unit includes an overvoltage protection circuit configured to monitor an overvoltage of at least one of the plurality of secondary battery cells. The overvoltage protection circuit is configured to blow the overvoltage-detecting fuse upon detecting the overvoltage of the secondary battery cells. In this configuration, the electrical separation of the overvoltage-detecting fuse provides the following advantage. That is, in assembling the power supply device, even if a signal of erroneously detecting an overvoltage is sent when electrically connecting the overvoltage protection circuit, the electrical separation prevents the overvoltage-detecting fuse from blowing, thereby protecting the power supply device from an unintended failure during the assembling.

A power supply device according to a third aspect of the present invention includes a battery unit and a circuit unit connected to the battery unit. The battery unit includes a series connection including a plurality of secondary battery cells connected at least in series to one another, a battery-side ground on a low-voltage side of the series connection, and a battery-side output on a high-voltage side of the series connection. The battery unit includes one or more battery-side intermediate terminals electrically connected to intermediate potentials of at least a part of the plurality of secondary battery cells connected in series. The circuit unit includes: one or more circuit-side intermediate terminals connected to at least one of the plurality of secondary battery cells via the one or more battery-side intermediate terminals; an overvoltage-detecting fuse connected to the battery-side output, the overvoltage-detecting fuse being configured to detect an overvoltage of the plurality of secondary battery cells and to blow upon detecting the overvoltage; and a detachable lead member interposed between the overvoltage-detecting fuse and the battery-side output. In this configuration described above, the detachment of the detachable lead member during assembling the power supply device allows the overvoltage-detecting fuse of the circuit unit to be electrically separated, which avoids a possible situation where the overvoltage-detecting fuse erroneously blows in connecting the battery-side intermediate terminals of the battery unit to the circuit-side intermediate terminals of the circuit unit. The detachment of the lead member enables random connection between the battery-side intermediate terminals and the circuit-side intermediate terminals, which results in an increase in workability of connecting between the circuit unit and the battery unit, leading to an increased manufacturing efficiency.

In a power supply device according to a fourth aspect of the present invention, in any one of the aspects described above, the circuit unit further includes an overvoltage protection circuit configured to monitor the overvoltage of the plurality of secondary battery cells. The overvoltage protection circuit is configured to blow the overvoltage-detecting fuse upon detecting the overvoltage of the secondary battery cells. This configuration described above provides the following advantage. That is, in assembling the power supply device, even if an overvoltage is erroneously detected when electrically connecting the overvoltage protection circuit, it is possible to avoid a situation where the overvoltage-detecting fuse blows, thereby protecting the power supply device from an unintended failure during the assembling.

In a power supply device according to a fifth aspect of the present invention, in any one of the aspects described above, the lead member is a metal bus bar. This configuration facilitates attaching and detaching the lead member, capable of passing a large current through it, to and from the circuit unit.

In a power supply device according to a sixth aspect of the present invention, in any one of the aspects described above, the lead member includes either a wire clip or a lead wire with a connector.

A power supply device according to a seventh aspect of the present invention includes a battery unit and a circuit unit connected to the battery unit. The battery unit includes a series connection including a plurality of secondary battery cells connected at least in series to one another, a battery-side ground on a low-voltage side of the series connection, and a battery-side output on a high-voltage side of the series connection. The battery unit includes one or more battery-side intermediate terminals electrically connected to intermediate potentials of at least a part of the plurality of secondary battery cells connected in series to one another. The circuit unit includes: one or more circuit-side intermediate terminals connected to at least one of the plurality of secondary battery cells via the one or more battery-side intermediate terminals; and an overvoltage-detecting fuse connected to the battery-side output, the overvoltage-detecting fuse being configured to detect an overvoltage of the plurality of secondary battery cells and to blow upon detecting the overvoltage. The overvoltage-detecting fuse includes: two thermal fuses connected in series to each other at a connection point; and a heating resistor having one end connected to the connection point of the thermal fuses, the heating resistor being configured to generate heat upon being energized so as to blow the thermal fuses. The overvoltage-detecting fuse constitutes a unit detachable from the circuit unit. In this configuration described above, the detachment of the detachable lead member during assembling the power supply device , allows the overvoltage-detecting fuse of the circuit unit to be electrically separated, which avoids a possible situation where the overvoltage-detecting fuse is erroneously caused to blow in connecting the battery-side intermediate terminals of the battery unit to the circuit-side intermediate terminals of the circuit unit. The detachment of the lead member enables random connection between the battery-side intermediate terminals and the circuit-side intermediate terminals, which results in an increase in workability of connecting between the circuit unit and the battery unit, leading to an increased manufacturing efficiency.

### BRIEF DESCRIPTION OF DRAWINGS

FIG. 1 is an exploded perspective view of a power supply device according to Exemplarily Embodiment 1 of the present invention.
FIG. 2 is a circuit diagram of the power supply device according to Embodiment 1 of the invention.
FIG. 3 is a circuit diagram of the power supply device illustrated in FIG. 2 when assembling the device while a lead member is detached.
FIG. 4 is a plan view of the power supply device according to Embodiment 1.
FIG. 5 is a circuit diagram of a power supply device according to Exemplarily Embodiment 2 when assembling the device while a fuse unit is detached.
FIG. 6 is an exploded perspective view of a conventional power supply device.
FIG. 7 is a circuit diagram of the conventional power supply device including an overvoltage-detecting fuse.

### DESCRIPTION OF EMBODIMENTS

Hereinafter exemplarily embodiments of the present invention will be described with reference to the accompanying drawings. However, the exemplary embodiments described below are examples for embodying the technical idea of the present invention, and the present invention is not limited to the following description. Moreover, this specification never limits the members described in the claims to the members of the exemplary embodiments. Unless otherwise specified, the dimensions, materials, shapes, relative positions, and the like of the configuration components described in the exemplary embodiments are not intended to limit the scope of the present invention but are merely illustrative examples. It should be noted that the sizes, positional relationship, and the like of members illustrated in the drawings may be exaggerated for clarity of explanation. Furthermore, in the following description, the same names and reference numerals indicate the same or similar members, and detailed description will be appropriately omitted. Furthermore, regarding elements that configure the present invention, a plurality of elements may be composed of the same member so that one member serves as a plurality of elements, or conversely, the function of one member can be shared and achieved by a plurality of members.

A power supply device according to the present invention is used in various applications that include backup power supplies for servers, power supplies mounted on electric-powered vehicles such as a hybrid vehicle and an electric vehicle for supplying electric power to vehicle's running motors, power supplies for storing electric power generated by such as photovoltaic power generation and wind power generation from natural energies, and power supplies for storing late-night electric power. Such a power supply device is used, in particular, as a power supply preferably used in high-power, large-current applications. Hereinafter, a power supply device to be used as a backup power supply for a server will be described as one exemplary embodiment of the present invention.

### Exemplary Embodiment 1

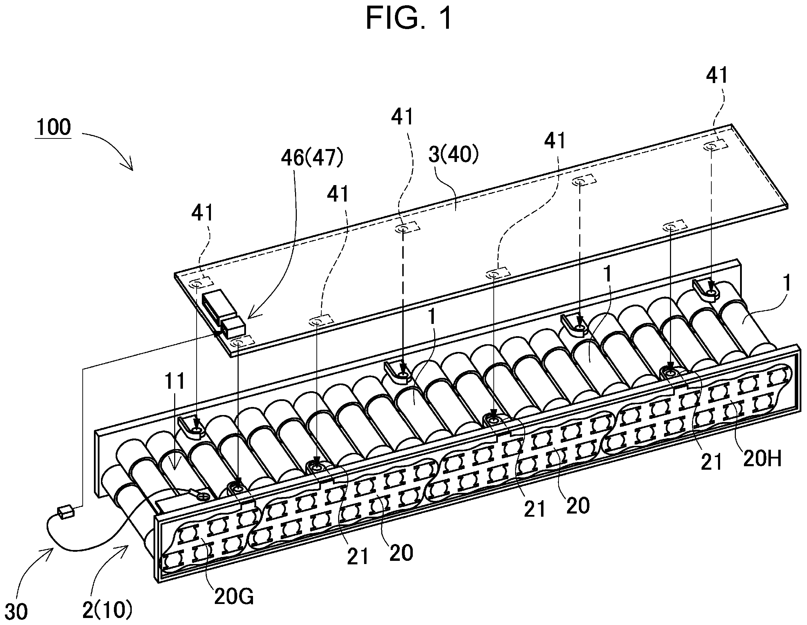

Power supply device 100 according to Exemplarily Embodiment 1 of the present invention is illustrated in an exploded perspective view of FIG. 1. Power supply device 100 illustrated in the figure includes battery unit 2 and circuit unit 3 mounted on a surface of battery unit 2. Battery unit 2 holds secondary battery cells 1. Circuit unit 3 includes circuit board 40.

### Secondary Battery Cell 1

Each secondary battery cell 1 is a cylindrical secondary battery cell with an outer case having a cylindrical shape. Cylindrical secondary battery cell 1 has electrode surfaces on both end surfaces thereof. Secondary battery cells 1 are connected at least in series to one another. Secondary battery cells 1 connected in series to one another are preferably connected in parallel to other secondary battery cells 1 connected in series to one another. The output of a battery assembly group composed of secondary battery cells 1 that involve such series connections is supplied from power supply device 100. Secondary battery cells 1 are cylindrical lithium-ion secondary batteries. However, that the secondary battery cells of the power supply device according to the present invention are not limited to the cylindrical batteries and also to the lithium-ion secondary batteries. All types of rechargeable batteries such as a nickel-hydrogen battery cell are also applicable to the battery cells.

### Battery Holder 10

Battery unit 2 is for holding secondary battery cells 1. Battery unit 2 includes battery holder 10 including battery-holding parts each having a cylindrical shape into which cylindrical secondary battery cell 1 can be inserted. In battery holder 10 of FIG. 1, the cylindrical battery-holding parts are arranged in two tiers, the upper tier and the lower tier. The cylindrical axes of the battery-holding parts in the upper tier deviate from the corresponding cylindrical axes of the battery-holding parts in the lower tier, reducing a total thickness of the battery holder. Battery holder 10 is made of material, such as polycarbonate ABC resin, with high insulation and heat resistance.

Battery holder 10 is divided into sub-holders sandwiching secondary battery cells 1 from both sides. The middle portions of secondary battery cells 1 are exposed from the sub-holders. While secondary battery cells 1 are sandwiched by respective pairs of the sub-holders, lead plates 20 are fixed on the side surfaces of battery holder 10 and lead plates 20 are welded to secondary battery cells 1. To position lead plates 20 at predetermined locations, each side surface of battery holder 10 has guides for positioning the leads. The guides are fit to the respective contours of lead plates 20.

In addition, battery holder 10 includes lead plates 20 and battery-side ground terminal 30. The lead plates 20 each includes battery-side intermediate terminal 21. Battery-side intermediate terminal 21 is electrically connected to at least one of secondary battery cells 1.

### Lead Plate 20

All lead plates 20 are disposed on the side surfaces of battery holder 10 and connected to the electrode surfaces of secondary battery cells 1. Lead plates 20 are for connecting secondary battery cells 1 in series and parallel to one another. In the case of high-capacity secondary battery cells 1 such as lithium-ion secondary batteries, for the purpose of detecting the state of each secondary battery cell 1, the potential of each of lead plates 20 is detected, which allows the voltage of an assembly group of secondary battery cells 1 connected in parallel to lead plate 20 in question to be detected. In this example, the battery assembly group is composed of a total of 42 secondary battery cells 1 in which the 42 cells of secondary battery cells 1 are connected in parallel every 6 secondary battery cells 1, which makes a set, into 7 sets, and the 7 sets are connected in series.

Lead plates 20 each electrically and mutually connects electrode terminals of adjacent secondary battery cells 1. Further, a lead plate out of lead plates 20 which serves as the ground side of the total output of a battery-connected body including secondary battery cells 1 electrically connected in series to one another is referred to as ground lead plate 20G. Battery-side ground terminal 30 is connected to ground lead plate 20G. In contrast, a lead plate serving as the HIGH side of the total output of the battery-connected body is referred to as output lead plate 20H.

Battery-side ground terminal 30 is connected to the ground side of the total output of secondary battery cells 1 electrically connected in series and/or parallel to one another. Battery-side ground terminal 30 is drawn outside from battery holder 10.

The upper surface of battery holder 10 is used as mounting surface 11 on which circuit board 40 is mounted. A frame body for holding the circuit board may be formed on the board-mounting surface. Alternatively, a board holder for holding the circuit board may be disposed separately.

### Circuit Board 40

Circuit board 40 is mounted on mounting surface 11. Electronic circuits are mounted on circuit board 40. Such circuit include a voltage-detecting circuit to detect potentials of intermediate portions of the battery assembly group in which secondary battery cells 1 are connected in series and parallel, a control circuit to control charging and discharging, and a safety circuit. The intermediate potentials of secondary battery cells 1 connected in series to constitute the battery assembly group are detected based on the voltages of the potential lead plates 20 and are supplied to the voltage-detecting circuit.

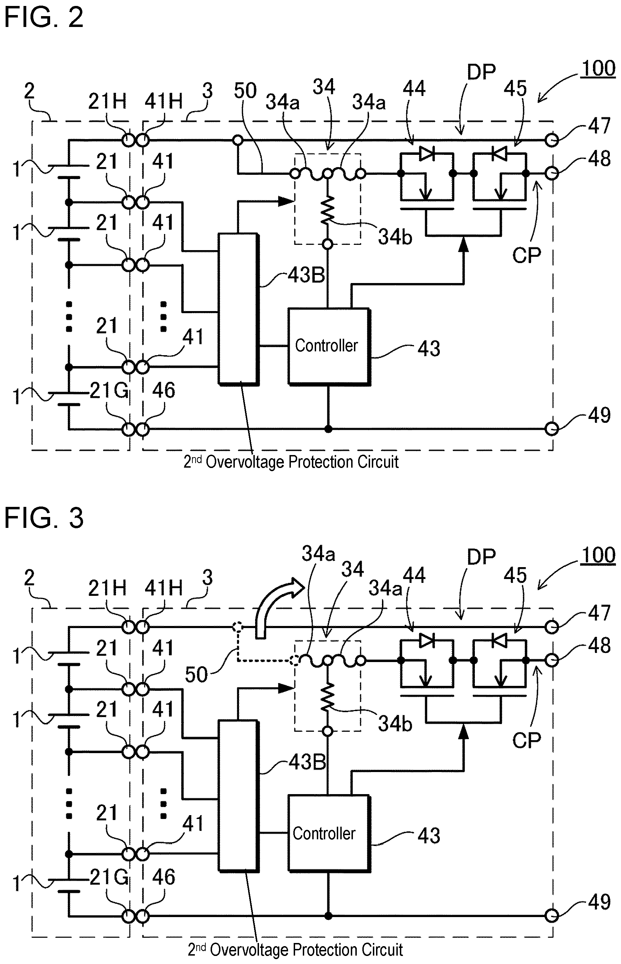

A circuit diagram of power supply device 100 is shown in FIG. 2. Power supply device 100 illustrated in the figure includes battery unit 2 and circuit unit 3.

### Battery Unit 2

Battery unit 2 includes secondary battery cells 1. The secondary battery cells 1 are connected in series to one another. Although not shown in FIG. 2 for brevity of explanation, the configuration may also be such that battery-connected bodies in each of which the cells have been connected in series are further connected in parallel. In addition, battery unit 2 includes battery-side ground 21G on the low-voltage side and battery-side output 21H on the high-voltage side, which are connected in series. Battery-side ground 21G is connected to ground lead plate 20G. Battery-side output 21H is connected to output lead plate 20H. Battery unit 2 further includes one or more battery-side intermediate terminals 21 electrically connected to intermediate potentials of at least a part of secondary battery cells 1 connected in series to one another.

As shown in FIG. 2, in battery unit 2, that battery-side ground 21G on the negative-electrode side is connected to circuit-side ground terminal 46 of circuit unit 3, and battery-side output 21H on the positive-electrode side is connected to circuit-side HIGH terminal 41H. Battery-side intermediate terminals 21 are connected to controller 43 via circuit-side intermediate terminals 41. Circuit-side intermediate terminals 41 are connected via conductive paths to external terminal 49 on the negative-electrode side. Battery-side output 21H is connected via conductive paths to external discharging-terminal 47 and external charging terminal 48 which are on the positive-electrode side. The path between battery-side output 21H and external discharging-terminal 47 constitutes discharging path DP of battery unit 2. Control of discharging via discharging path DP is performed on the side of a high-order power supply or system.

In charging-discharging path CP connecting between the connection terminal and external charging terminal 48, fuse module 34, charging switching element 44, and discharging switching element 45 are connected in series. The gate of charging switching element 44 and the gate of discharging switching element 45 are connected to controller 43.

In the example of FIG. 2, in order to connect battery-side output 21H, discharging path DP connected to external discharging-terminal 47 is disposed separately from charging-discharging path CP connected to external charging terminal 48. For example, like a power supply device for the backup of an electricity storage server, in the case of discharge paths for passing a large current of 100 A class, discharging path DP is disposed separately from charging-discharging path CP, which facilitates dealing with large current discharging. However, the present invention is not limited to the configuration provided with a separate path for an exclusive use in discharging, and is applicable to other configurations without any path for use in discharging. That is, in the exemplary circuit shown in FIG. 2, discharging path DP may be omitted. For example, in the discharge current being relatively small, the expensive and large-size overvoltage-detecting fuse usable for a large current is omitted aiming at providing a circuit that features a simplified, down-sized, and lowered-cost configuration. In this case, an overvoltage-detecting fuse is disposed in charging-discharging path CP.

Fuse module 34 includes thermal fuses 34a and 34a connected in series to each other at a connection point, and heating resistor 34b with one end connected to the connection point. The other end of heating resistor 34b of fuse module 34 is connected to controller 43. The other end may be connected via a resistance-heating switching element to a conductive path that connects between battery-side intermediate terminal 21 and external terminal 49. In this case, the gate of the resistance-heating switching element is connected to controller 43 and the resistance-heating switching element is controlled by controller 43, thereby controlling the operation of heating resistor 34b.

### Circuit Unit 3

Circuit unit 3 includes a circuit board on which electronic components that constitutes such as a charging-discharging circuit and an overvoltage protection circuit are mounted. Circuit unit 3 includes circuit-side intermediate terminals 41, external discharging-terminal 47, external charging-terminal 48, controller 43, fuse module 34, lead member 50, charging switching element 44, discharging switching element 45, and second overvoltage protection circuit 43B. Circuit-side intermediate terminals 41 are connected to at least one of secondary battery cells 1 via one or more battery-side intermediate terminals 21.

Controller 43 charges and discharges battery unit 2 by controlling charging switching element 44 and discharging switching element 45. Charging switching element 44 and discharging switching element 45are preferably FETs. Further, the FETs may be of a p-channel type other than the n-channel type illustrated in FIG. 2 and other figures. In the examples in FIG. 2 and other figures, an FET for charging is disposed on the left side, such that an FET for discharging is disposed on the right side, and such that the drains of these FETs are connected to each other. However, the configuration is not limited to this. For example, an FET for discharging may be disposed on the left side, such that an FET for charging is disposed on the right side, and such that the sources of these FETs are connected to each other. Further, an appropriate element may be added as needed in such a way that, for example, a resistor is connected between the FET for charging and the FET for discharging. FETs may constitute charging switching element 44 and discharging switching element 45. For example, FETs connected in parallel to each other allows the use of elements with a low-rated current.

Controller 43 constitutes an overvoltage protection circuit. That is, the controller monitors intermediate potentials in the series connection of secondary battery cells 1 via battery-side intermediate terminals 21 and circuit-side intermediate terminals 41. When the intermediate potentials reach a predetermined voltage, the controller regards them as being at an overvoltage, and thus causes fuse module 34 to operate to interrupt the current.

In addition, circuit unit 3 includes second overvoltage protection circuit 43B. Second overvoltage protection circuit 43B monitors the charging current during charging of battery unit 2 separately from the monitoring performed by the overvoltage protection circuit of controller 43 described above, thereby enhancing safety. Second overvoltage protection circuit 43B may be omitted.

### Fuse Module 34

Fuse module 34 functions as an overvoltage-detecting fuse configured to blow upon detecting an overvoltage of secondary battery cells 1. Fuse module 34 includes two thermal fuses 34a and 34a connected in series to each other at a connection point and heating resistor 34b with one end connected to the connection point of thermal fuses 34a. The heating resistor generates heat upon being energized to cause thermal fuses 34a to blow. Heating resistor 634b is controlled by controller 43 and second overvoltage protection circuit 43B. For example, a resistance-heating switching element, such as a MOSFET, may be connected to heating resistor 634b so as to cause heating resistor 634b to work. In this case, the other end of the resistance-heating switching element may be connected to a conductive path on the ground side or, alternatively, an intermediate potential of battery unit 2 depending on a required drive voltage, a withstand voltage, or the like.

### Lead Member 50

Lead member 50 is connected between fuse module 34 and battery-side output 21H. Lead member 50 is detachable from circuit unit 3. Detachment of lead member 50 from circuit unit 3 electrically separates fuse module 34 as shown in FIG. 3. In this configuration, the detachment of detachable lead member 50 when assembling power supply device 100 avoids the following possible situation. That is, during connecting battery-side intermediate terminals 21 of battery unit 2 to circuit-side intermediate terminals 41 of circuit unit 3, the overvoltage protection circuit may erroneously work to blow the overvoltage-detecting fuse. Further, the detachment enables random connection between battery-side intermediate terminals 21 and circuit-side intermediate terminals 41, which results in an increase in workability of connecting between circuit unit 3 and battery unit 2, leading to an increased manufacturing efficiency.

Fuse module 34 disposed in charging-discharging path CP is mounted on circuit board 40. Lead member 50 connects between fuse module 34 and discharging path DP on circuit board 40. Lead member 50 may be implemented by a lead wire or metal bus bar.

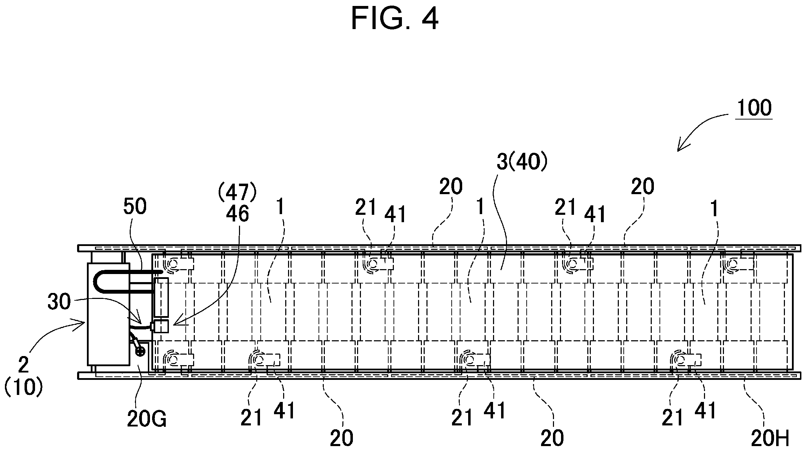

In the case where the overvoltage-detecting fuse has a large size for passing a large current, a fuse module including the overvoltage-detecting fuse may be prepared as a separate member, instead of being mounted on the circuit board. For example, the fuse module may constitute a unit, such that the overvoltage-detecting fuse is accommodated in a case. The present invention is also applicable to even this case, so that lead member 50 is used to connect between circuit board 40 and fuse module 34. For example, in the example of FIG. 4, fuse module 34 is mounted on another board different from the circuit board, in which case lead member 50 implemented by a bus bar is used to electrically connect between these boards. This configuration facilitates attaching and detaching of lead member 50, usable for passing a large current through it, to and from circuit unit 3.

Lead member 50 is not limited to a bus bar, and may be implemented by a flexible member, such as, a wire clip or a lead wire with a connector. Fuse module 34 may be mounted on the circuit board. In this case, lead member 50 is effectively configured with a flexible member being easily attached and detached. The term "detachable" as referred to herein not necessarily means that lead member 50 can be completely and physically detached but means that lead member 50 is only required to be able to be temporally in a mode of physically intercepting the energization. For example, in the case of use of the lead wire or wire clip described above, while fixing one end thereof to one side of the fuse module or battery-side output, the other end thereof, as being a free end, is respectively coupled to the other side of the fuse module or battery-side output, with a clip, a ring crimp terminal, a connector, or the like by means of engaging, locking, clipping, inserting and removing, screwing, or the like. Alternatively, one end of the lead wire is fixed, and the other end is locked in such as a notch of the lead plate. Alternatively, a switch may be utilized in order to physically intercept the energization.

### Method of Manufacturing Power Supply Device

Hereinafter, a method of manufacturing the power supply device will be described. First, while detachable lead member 50 is detached, circuit unit 3 is connected to battery unit 2. For example, as shown in FIG. 1, circuit unit 3 is placed on a surface of battery unit 2, and then, battery-side intermediate terminals 21 of battery unit 2 are connected to respective circuit-side intermediate terminals 41 of circuit unit 3. Then, lead member 50 is fixed to circuit unit 3, and the overvoltage-detecting fuse is connected to battery-side output 21H. In this configuration, when circuit unit 3 including the overvoltage-detecting fuse is subjected to almost-simultaneous random connection to the battery series-connected body, the circuit board can be attached without erroneously causing the overvoltage-detecting fuse to blow. Moreover, by realizing the random connection, the board and the cell block can be connected in a short time, resulting in increased manufacturing efficiency.

### Exemplary Embodiment 2

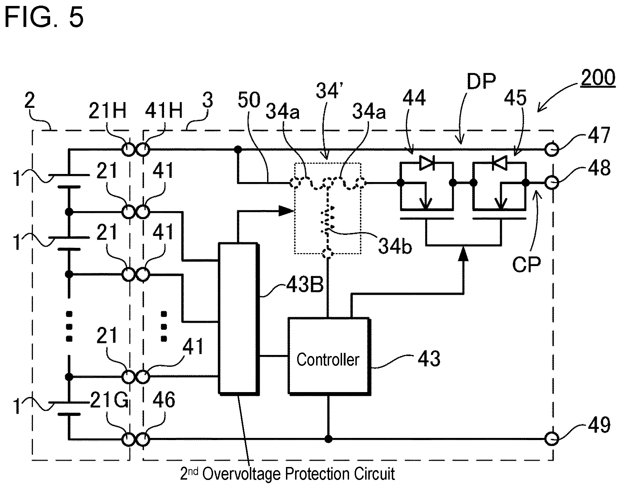

In the present invention, other than the detachable configuration of lead member 50 for connecting between fuse module 34 and battery-side output 21H, the fuse module per se may be detachable. This configuration is shown in the circuit diagram illustrated in FIG. 5 as power supply device 200 according to Exemplary Embodiment 2. In power supply device 200 illustrated in the figure, the same members as those of the first exemplary embodiment described above are denoted by the same reference numerals and symbols, and their detailed explanations will be omitted. In power supply device 200 illustrated in the figure, the fuse module, unit-type fuse unit 34', instead of the lead member, is detachable from circuit unit 3. In this configuration, as in the case described earlier, the energization of thermal fuse 34a may be physically intercepted when assembling power supply device 200. This configuration avoids a possible situation where heating resistor 34b would otherwise be heated to blow thermal fuse 34a even when the overvoltage protection circuit erroneously detects an overvoltage. In this configuration, the circuit unit is reusable even after thermal fuse 34a blown by only replacing fuse unit 34' with a new one. On the other hand, although lead member 50 according to Embodiment 1 requires only two terminals, fuse unit 34' according to the second embodiment requires three terminals.

### INDUSTRIAL APPLICABILITY

A power supply device and a method of manufacturing thereof according to the present invention are preferably used as a backup power-supply device mountable in a power supply module of a computer server. In addition, it can appropriately be used in applications including backup power-supply devices of wireless base stations for mobile phones and the like, storage power supplies for use in households and plants, storage power devices combined with solar cells, e.g., power supplies for streetlights, and backup power supplies for traffic lights. The applications also include power supplies for, such as, plug-in hybrid electric vehicles switchable between an EV-running mode and an HEV-running mode, hybrid electric vehicles, and electric vehicles.

### REFERENCE MARKS IN THE DRAWINGS

- 100, 200: power supply device
- 1: secondary battery cell
- 2: battery unit
- 3: circuit unit
- 10: battery holder
- 11: mounting surface
- 20: lead plate
- 20H: output lead plate
- 20G: ground lead plate
- 21: battery-side intermediate terminal
- 21H: battery-side output
- 21G: battery-side ground
- 30: battery-side ground terminal
- 34: fuse module
- 34': fuse unit
- 34a: thermal fuse
- 34b: heating resistor
- 40: circuit board
- 41: circuit-side intermediate terminal
- 41H: circuit-side HIGH terminal
- 43: controller
- 43B: second overvoltage protection circuit
- 44: charging switching-element
- 45: discharging switching-element
- 46: circuit-side ground terminal
- 47: external discharging-terminal
- 48: external charging-terminal
- 49: external terminal
- 50: lead member
- 600: power supply device
- 601: secondary battery cell
- 602: battery unit
- 603: circuit unit
- 604: circuit board
- 621H: battery-side total-positive terminal
- 621G: battery-side ground terminal
- 634: fuse module
- 634a: thermal fuse
- 634b: heating resistor
- 640: connection terminal
- 641: connection terminal
- 644: charging switching element
- 645: discharging switching element
- 646: controller
- 648: external terminal
- 649: external terminal
- 650: resistance-heating switching element
- DP: discharging path
- CP: charging-discharging path

## Claims

1. A method of manufacturing a power supply device including a battery unit and a circuit unit electrically connected to the battery unit and configured to control charging and discharging of the battery unit, wherein the battery unit includes a series connection including a plurality of secondary battery cells connected at least in series to one another, a battery-side ground on a low-voltage side of the series connection, and a battery-side output on a high-voltage side of the series connection, and the circuit unit includes an overvoltage-detecting fuse configured to detect an overvoltage and to blow upon detecting the overvoltage, the method comprising:
connecting one or more battery-side intermediate terminals disposed in the battery unit to respective one or more circuit-side intermediate terminals disposed in the circuit unit while a detachable lead member configured to connect the overvoltage-detecting fuse to the battery-side output is detached, the one or more battery-side intermediate terminals being electrically connected to intermediate potentials of at least a part of the plurality of the secondary battery cells connected in series to one another; and
connecting the overvoltage-detecting fuse to the battery-side output by fixing the lead member to the circuit unit.

2. The method according to claim 1, wherein
the circuit unit includes an overvoltage protection circuit configured to monitor an overvoltage of at least one of the plurality of secondary battery cells, and
the overvoltage protection circuit is configured to blow the overvoltage-detecting fuse upon detecting the overvoltage of the secondary battery cells.

3. A power supply device comprising:
a battery unit including
a series connection including a plurality of secondary battery cells connected at least in series to one another,
a battery-side ground on a low-voltage side of the series connection, and
a battery-side output on a high-voltage side of the series connection; and
a circuit unit connected to the battery unit, wherein
the battery unit includes one or more battery-side intermediate terminals electrically connected to intermediate potentials of at least a part of the plurality of secondary battery cells connected in series, and
the circuit unit includes:
one or more circuit-side intermediate terminals connected to at least one of the plurality of secondary battery cells via the one or more battery-side intermediate terminals;
an overvoltage-detecting fuse connected to the battery-side output, the overvoltage-detecting fuse being configured to detect an overvoltage of the plurality of secondary battery cells and to blow upon detecting the overvoltage; and
a detachable lead member interposed between the overvoltage-detecting fuse and the battery-side output.

4. The power supply device according to claim 3, wherein
the circuit unit further includes an overvoltage protection circuit configured to monitor the overvoltage of the plurality of secondary battery cells, and
the overvoltage protection circuit is configured to blow the overvoltage-detecting fuse upon detecting the overvoltage of the secondary battery cells.

5. The power supply device according to claim 3 or 4, wherein the lead member comprises a metal bus bar.

6. The power supply device according to claim 3 or 4, wherein the lead member includes either a wire clip or a lead wire with a connector.

7. A power supply device comprising:
a battery unit including
a series connection including a plurality of secondary battery cells connected at least in series to one another,
a battery-side ground on a low-voltage side of the series connection, and
a battery-side output on a high-voltage side of the series connection; and
a circuit unit connected to the battery unit, wherein
the battery unit includes one or more battery-side intermediate terminals electrically connected to intermediate potentials of at least a part of the plurality of secondary battery cells connected in series to one another,
the circuit unit includes:
one or more circuit-side intermediate terminals connected to at least one of the plurality of secondary battery cells via the one or more battery-side intermediate terminals; and
an overvoltage-detecting fuse connected to the battery-side output, the overvoltage-detecting fuse being configured to detect an overvoltage of the plurality of secondary battery cells and to blow upon detecting the overvoltage,
the overvoltage-detecting fuse includes:
two thermal fuses connected in series to each other at a connection point; and
a heating resistor having one end connected to the connection point of the thermal fuses, the heating resistor being configured to generate heat upon being energized so as to blow the thermal fuses, and
the overvoltage-detecting fuse constitutes a unit detachable from the circuit unit.
